# EUROPEAN PATENT SPECIFICATION

(11) **EP 4 407 531 B1**
(45) Date of publication and mention of the grant of the patent: **03.09.2025**
(21) Application number: 23472001.9
(22) Date of filing: 30.03.2023
(51) Int. Cl.: G06Q 10/06, A01B 79/00, A01C 14/00, A01C 21/00, A23K 10/30, G06Q 50/02

(54) **INTEGRATED SYSTEM OF ADMINISTRATION, CONTROL AND REPORTING OF SEQUESTERED CARBON IN THE SOIL, PLANT RESIDUES AND PRODUCE**
INTEGRIERTES SYSTEM ZUR VERABREICHUNG, KONTROLLE UND BERICHTERSTATTUNG VON MASKIERTEM KOHLENSTOFF IM BODEN, PFLANZENRÜCKSTÄNDEN UND PRODUKT
INTEGRATED SYSTEM OF ADMINISTRATION, CONTROL AND REPORTING OF SEQUESTERED CARBON IN THE SOIL, PLANT RESIDUES AND PRODUCE

(30) Priority: 26.10.2022 BG 561322
(43) Date of publication of application: 31.07.2024
(73) Proprietor: Agviser AD, 4006 Plovdiv (BG); Hristo Stoyanov Nikolov, 4000 Plovdiv (BG)
(72) Inventor: Hristo, Nikolov, Plovdiv 4000 (BG)
(74) Representative: Benatov, Samuil Gabriel

(56) References cited:
- AU-A1- 2015 258 267
- US-A1- 2021 360 866
- ANONYMOUS: "Carbon farming - Wikipedia", 13 September 2022 (2022-09-13), pages 1 - 13, XP093174776, Retrieved from the Internet <URL:https://en.wikipedia.org/w/index.php?title=Carbon_farming&oldid=1110137753> [retrieved on 20240613]
- CLIMATE ASSOCIATES LIMITED: "Smart Agriculture Use Cases from FAO", 10 September 2017 (2017-09-10), pages 1 - 570, XP014299413, Retrieved from the Internet <URL:docbox.etsi.org\ISG\CIM\05-Contributions\2017\CIM(17)031001_Smart_Agriculture_Use_Cases_from_FAO.pdf> [retrieved on 20170910]

## Description

### Technical field

The invention refers to an integrated system for the administration, control and reporting of carbon sequestered in soil, plant residues and produce and finds application in agriculture, forestry and farming.

### Prior Art

From WO 2022144714, a system for analysis of nutrients in the soil is known, including a server 30, having a two-way wireless connection with a sample taking device. The server has a database module where the data from the probe is stored and which is connected to a module for calculations and analysis, which sends the data from the analysis to a module for preparation of a report on the soil. The report on the soil includes all nutrient values of the soil and provides recommendations regarding the soil treatment and cultivation. The detailed report is sent to the farmers or users.

The known system gives information only about the nutritional substances in the soil and no laboratory analysis of the carbon in the soil is performed by means of it.

### Technical nature of the invention

The task of the invention is to create an integrated system for administration, control and reporting of the sequestered carbon in the soil based on chemical laboratory analysis in order to guarantee the ecology of the environment by means of reducing CO2.

The task has been solved by an integrated system for administration, control and reporting of the sequestered carbon in the soil, plant residues and produce, including a server having wireless connection configured with ability of exchanging data with a probe and a farmer module, wherein the server includes a database module, configured for storing data and connected to a comparative analysis module, which is configured for sending data from analysis to a report preparation module.

According to the invention, the server also comprises serially connected modules, which are configured for receiving and sending data to each other in the sequence:
- a module for plot maps' loading, configured for obtaining plot maps' data from the database module,
- a module for dividing the plot into georeferenced cells,
- an assignment generating module,
- a data visualization module,
- a module for generation of recommendation and issuance of a technological map for carbon farming, configured for storing information based on individual barcodes for three layers of soil at a depth of 0-30 cm, 30-60 cm and 60-90 cm from each georeferenced cell,
- said comparative analysis module, is further configured for: calculating of accumulated/sequestered carbon in soil for a period of one economic year, and for analyzing quantitative difference between two consecutive samples - a baseline and a control samples, and for reporting a quantity of sequestered soil carbon to
- a module for reporting of quantity of exported carbon,
- a module for calculation of total quantity of captured carbon,
- a carbon credit calculating module,
- said report generating module, configured for generating carbon credit certificates, and
- a communication module configured for providing said wireless connection.

The assignment generating module is configured for sending a generated assignment for soil sampling to an operator's mobile device, equipped with a mobile application, and the operator's mobile device is located in a motor vehicle on which the probe is mounted. The operator's mobile device with the mobile application is connected to the module for generation of recommendation and issuance of a technological map for carbon farming that is configured for receiving laboratory analyzed data for a soil sample from a data storage and retrieval module comprised in a laboratory testing block, which contains serially connected a sample reception and a sample preparation module, a laboratory analysis module and the data storage and retrieval module. The sample reception and a sample preparation module is configured for generating a laboratory code of sample, wherein the data visualization module is configured for exchanging data for samples to the sample preparation module. The communication module is connected with ability of exchanging data for samples to the farmer module, and to the operator's mobile device, and to the module for generation of recommendation and issuance of a technological map for carbon farming.

The integrated system for administration, control and reporting of the sequestered carbon in the soil, plant residues and produce directs, measures and reports the quantity of carbon by a unique, accurate chemical and physical method. Reporting takes place on the basis of the quantitative difference between two consecutive samples - a baseline and control one whereby there is no option for doubling of the values - i.e. only the difference, if any, is reported. In addition, it aims at: reduction and removal of CO2; undisputable proof and registration of the reduction of CO2; restoration of soils and biodiversity; additional revenues for farmers; it stimulates sustainable compensation schemes for the business.

### Description of the enclosed figures

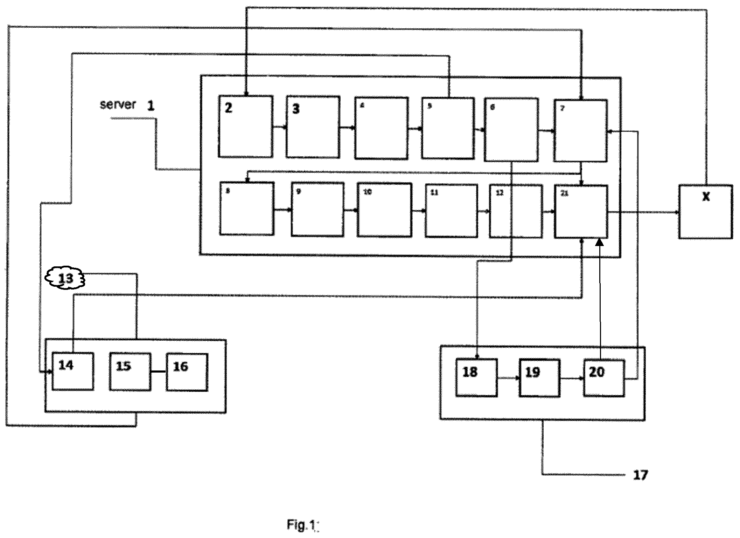

Fig. 1 shows a diagram of the integrated system for administration, control and reporting of the sequestered carbon in the soil, plant residues and produce.

### An example implementation of the invention

As seen in the enclosed figure, an integrated system for administration, control and reporting of the sequestered carbon in the soil, plant residues and produce includes a server 1, having wireless connection with a mobile device 14 and with a laboratory testing block 17. The server 1 has serially connected database module 2, plot maps' loading module 3, module for dividing the plot into cells 4, assignment generating module 5, data visualization module 6, module for generation of recommendation and issuance of technological map for carbon farming 7, comparative analysis module 8, reporting the quantity of sequestered carbon in the soil, module for reporting the quantity of exported carbon 9, module for calculation of the total quantity of captured carbon 10, carbon credit calculation module 11, having a connection with the report preparing module 12, generating certificates of carbon credits, communication module 21. The assignment generating module 5 is connected to the operator's mobile device 14, equipped with a mobile application 13. The mobile device 14 is located in a motor vehicle 15, on which a probe 16 is mounted. The module for generation of recommendation and issuance of technological map for carbon farming 7 has connection with the laboratory testing block 17, which contains a module for sample reception and sample preparation 18, laboratory analysis module 19 and data storage and retrieval module 20. The communication module 21 is connected to a farmer (X) module and to the module for generation of recommendation and issuance of technological map for carbon farming 7.

### Application of the invention

The information collected about the specifics of the farm or holding of a farmer is stored in the database module 2 and a suitability evaluation is performed and a contract with the applicant is entered into. A unique individual number is entered for each contract. These data are sent to the module for plot map loading 3, for outlining of plots where data of the plot borders and of their shape and geographical location is entered. Visualization of the relevant plots is performed, which is sent to the module for dividing of the plot into cells 4, where on the grounds of the information obtained from the modules 2 and 3, division of the plot is performed into separate cells for taking a sample. The information from the module for dividing the plot into cells 4 is sent to the assignment generating module 5. When preparing the assignment for sample taking, the types of crops and the area of the separate physical blocks is taken into account, and each plot is brought down to a separate cell for sampling. Soil sampling is performed based on georeferenced data guaranteeing representativeness for the entire area by a methodology for determining of micro areas for sampling. The generated assignment for taking a sample from the soil is sent to the data visualization module 6 and through the mobile application 13, to the operator's mobile device 14. In the assignment, the physical plots, divided into cells to be subject to sampling are loaded along the relevant crops, as well as their geolocation, and they are visualized on the screen of the mobile application 13. The operator takes samples through the probe 16 from the relevant points, according to the relief, shape and size of the plot, from each layer of the soil at a depth of 0-30 cm; 30-60 cm and 60-90 cm. The sample is separated into individual vessels of the probe 16 and after completion of the sampling from each layer, it is sealed in a separate envelope on which a barcode is applied, which is scanned and sent to the module for generation of recommendation and issuance of technological map for carbon farming 7. This information is also sent to the module for sample reception and sample preparation 18 of the laboratory testing block 17 where the soil sample delivered is crushed, ground, homogenized and a laboratory code is generated, which is sent to the data visualization module 6. The soil sample is moved to the laboratory analysis module 19 where the percentage content of active carbon and total organic carbon is determined and the data is sent to the module for data storage and retrieval 20. Said data is sent to the module for generation of recommendation and issuance of technological map for carbon farming 7, where on the grounds of the information obtained from the mobile application 13, from the data visualization module 6, as well as from the laboratory testing block 17, a recommendation is generated and a technological map for carbon farming is issued, which through the communication module 21 is sent to customer X. The data is also sent to the comparative analysis module 8 where the quantity of sequestered soil carbon is reported as at the date of sampling and is compared to the baseline sample. Thus, the actually accumulated/sequestered carbon in the soil is calculated for a period of one economic year. The information form the chemical laboratory analysis of the secondary products from crop residues /for example, the straw from cereal-grain crops, if it is baled and sold/ is processed in the module for reporting of the quantity of exported carbon 9. The quantitative analysis reports only the quantity (kg) of produce realized on the market and/or secondary products from crop residues as to the yields (kg) in the specific holding, multiplied by the results from the chemical laboratory analysis. The data from the comparative analysis module 8 and the module for reporting of the quantity of exported carbon 9 is summed in the modules of captured carbon 10. The information from this summation is sent to the carbon credit calculation module 11 where it is converted into carbon credits and is sent to the report preparation module 12. Based on the report, a certificate of carbon credit is generated with the relevant unique number and through the communication module 21 it is sent to the customer/farmer X and to the module for generation of recommendation and issuance of technological map for carbon farming 7.

## Claims

1. Integrated system for administration, control and reporting of the sequestered carbon in the soil, plant residues and produce including a server (1) having wireless connection configured with ability of exchanging data with a probe (16) and a farmer module (X), wherein the server (1) includes a database module (2), configured for storing data and connected to a comparative analysis module (8), which is configured for sending data from analysis to a report preparation module (12), **characterized by the fact that** the server (1) also comprises serially connected modules, which are configured for receiving and sending data to each other in the sequence:
- a module for plot maps' loading (3), configured for obtaining plot maps' data from the database module (2),
- a module for dividing the plot into georeferenced cells (4),
- an assignment generating module (5),
- a data visualization module (6),
- a module for generation of recommendation and issuance of a technological map for carbon farming (7), configured for storing information based on individual barcodes for three layers of soil at a depth of 0-30 cm, 30-60 cm and 60-90 cm from each georeferenced cell,
- said comparative analysis module (8), is further configured for: calculating of accumulated/sequestered carbon in soil for a period of one economic year, and for analyzing quantitative difference between two consecutive samples - a baseline and a control samples, and for reporting a quantity of sequestered soil carbon to
- a module for reporting of quantity of exported carbon (9),
- a module for calculation of total quantity of captured carbon (10),
- a carbon credit calculating module (11),
- said report generating module (12), configured for generating carbon credit certificates, and
- a communication module (21) configured for providing said wireless connection,
whereby the assignment generating module (5) is configured for sending a generated assignment for soil sampling to an operator's mobile device (14), equipped with a mobile application (13), and the operator's mobile device (14) is located in a motor vehicle (15) on which the probe (16) is mounted, wherein the operator's mobile device (14) with the mobile application (13) is connected to the module for generation of recommendation and issuance of a technological map for carbon farming (7) that is configured for receiving laboratory analyzed data for a soil sample from a data storage and retrieval module (20) comprised in a laboratory testing block (17), which contains serially connected a sample reception and a sample preparation module (18), a laboratory analysis module (19) and the data storage and retrieval module (20), wherein the sample reception and a sample preparation module (18) is configured for generating a laboratory code of sample, wherein the data visualization module (6) is configured for exchanging data for samples to the sample preparation module (18), wherein the communication module (21) is connected with ability of exchanging data for samples to the farmer module (X), and to the operator's mobile device (14), and to the module for generation of recommendation and issuance of a technological map for carbon farming (7).

## Patentansprüche

1. Integriertes System zur Verwaltung, Kontrolle und Berichterstattung des gebundenen Kohlenstoffs in Böden, Pflanzenresten und landwirtschaftlichen Erzeugnissen, bestehend aus einem Server (1) mit drahtloser Verbindung zum Datenaustausch mit einer Sonde (16) und einem Farmer-Modul (X), wobei der Server (1) ein Datenbankmodul (2) zur Datenspeicherung umfasst und mit einemVergleichsanalysemodul (8) verbunden ist, welches zum Senden von Daten aus der Analyse an ein Berichtserstellungsmodul (12) konfiguriert ist, **dadurch gekennzeichnet, dass** der Server (1) außerdem seriell verbundene Module umfasst, welche zum Empfangen und Senden die von Daten in der folgenden Reihenfolge konfiguriert sind:
- ein Modul zum Laden von Parzellenkarten (3), das zum Abrufen von Parzellenkartendaten aus dem Datenbankmodul (2) konfiguriert ist,
- ein Modul zur Aufteilung der Parzelle in georeferenzierte Zellen (4),
- ein Modul zur Zuordnungsgenerierung (5),
- ein Modul zur Datenvisualisierung (6),
- ein Modul zur Erstellung von Empfehlungen und zur Ausgabe einer technologischen Karte für die Kohlenstofflandwirtschaft (7), das für die Speicherung von Informationen konfiguriert ist, basierend auf individuellen Barcodes für drei Bodenschichten in einer Tiefe von 0-30 cm, 30-60 cm und 60-90 cm von jeder georeferenzierten Zelle.
- das benannte Modul zur vergleichenden Analyse (8) ist ferner konfiguriert für: die Berechnung des im Boden gespeicherten/angereicherten Kohlenstoffs für einen Zeitraum von einem Wirtschaftsjahr, und für die Analyse quantitativer Unterschiede zwischen zwei aufeinanderfolgenden Proben - einer Basis- und einer Kontrollprobe - und für die Meldung der Menge an gebundenem Bodenkohlenstoff an
- ein Modul zur Meldung der Menge des exportierten Kohlenstoffs (9),
- ein Modul zur Berechnung der Gesamtmenge des gebundenen Kohlenstoffs (10),
- ein Modul zur Berechnung von Kohlenstoffgutschriften (11),
- das benannte Modul zur Berichterstellung (12), das für die Generierung von Kohlenstoffgutschriften-Zertifikaten konfiguriert ist, und
- ein Kommunikationsmodul (21), das zur Bereitstellung der benanntendrahtlosen Verbindung konfiguriert ist,
wobei das Modul zur Zuordnungserstellung (5) konfiguriert ist, um eine generierte Zuordnung für die Bodenprobenahme an das Mobilgerät (14) eines Bedieners zu senden, das mit einer mobilen Anwendung (13) ausgestattet ist, und das Mobilgerät (14) des Bedieners sich in einem Kraftfahrzeug (15) befindet, an dem die Sonde (16) montiert ist, worin das Mobilgerät (14) des Bedieners mit der mobilen Anwendung (13) mit dem Modul zur Erstellung von Empfehlungen und Ausgabe einer technologischen Karte für Kohlenstofflandwirtschaft (7) verbunden ist, das zum Empfangen von im Labor analysierten Daten einer Bodenprobe von einem Datenspeicher- und - abrufmodul (20) konfiguriert ist, das in einem Labortestblock (17) enthalten ist, der wiederum ein Probenempfangs- und ein Probenvorbereitungsmodul (18), ein Laboranalysemodul (19) und das Datenspeicher- und -abrufmodul (20) in Reihe geschaltet enthält, wobei das Probenempfangs- und ein Probenvorbereitungsmodul (18) zum Generieren eines Laborcodes der Probe konfiguriert ist, wobei das Datenvisualisierungsmodul (6) zum Austausch von Daten für Proben mit dem Probenvorbereitungsmodul (18) konfiguriert ist, wobei das Kommunikationsmodul (21) zum Austausch von Daten für Proben mit dem Farmer-Modul (X) und mit dem Mobilgerät (14) des Bedieners sowie mit dem Modul zur Erstellung von Empfehlungen und Ausgabe einer technologischen Karte für Kohlenstofflandwirtschaft (7) verbunden ist.

## Revendications

1. Système intégré d'administration, de contrôle et de compte-rendu du carbone séquestré dans un sol, des résidus végétaux et des produits, le système comprenant un serveur (1) doté d'une connexion sans fil configurée pour échanger des données avec une sonde (16) et un module agriculteur (X), dans lequel le serveur (1) comprend un module de base de données (2), configuré pour stocker des données et connecté à un module d'analyse comparative (8), qui est configuré pour envoyer des données d'analyse à un module de préparation de rapport (12), **caractérisé en ce que** le serveur (1) comprend également des modules connectés en série, qui sont configurés pour recevoir et envoyer des données les uns aux autres dans la séquence :
- un module de chargement de cartes de parcelles (3), configuré pour obtenir des données de cartes de parcelles à partir du module de base de données (2),
- un module permettant de diviser la parcelle en cellules géoréférencées (4),
- un module de génération d'affectations (5),
- un module de visualisation de données (6),
- un module de génération de recommandations et d'émission d'une carte technologique pour l'agriculture du carbone (7), configuré pour stocker des informations basées sur des codes-barres individuels pour trois couches de sol à une profondeur de 0 à 30 cm, 30 à 60 cm et 60 à 90 cm de chaque cellule géoréférencée,
- ledit module d'analyse comparative (8) étant en outre configuré pour : calculer le carbone accumulé/séquestré dans le sol pendant une période d'une année économique, et pour analyser la différence quantitative entre deux échantillons consécutifs - un échantillon de référence et un échantillon de contrôle, et pour rapporter une quantité de carbone du sol séquestré à
- un module de compte-rendu de la quantité de carbone exportée (9),
- un module de calcul de la quantité totale de carbone capturé (10),
- un module de calcul de crédit carbone (11),
- ledit module de génération de rapports (12), configuré pour générer des certificats de crédit carbone, et
- un module de communication (21) configuré pour fournir ladite connexion sans fil,
le module de génération d'affectations (5) étant configuré pour envoyer une affectation générée pour l'échantillonnage du sol à un appareil mobile d'un opérateur (14), équipé d'une application mobile (13), et l'appareil mobile de l'opérateur (14) étant situé dans un véhicule à moteur (15) sur lequel la sonde (16) est montée, l'appareil mobile de l'opérateur (14), équipé de l'application mobile (13), étant connecté au module de génération de recommandations et d'émission d'une carte technologique pour l'agriculture du carbone (7), ce module étant configuré pour recevoir des données analysées en laboratoire pour un échantillon de sol à partir d'un module de stockage et de récupération de données (20) compris dans un bloc d'essais en laboratoire (17), qui contient en série un module de réception et de préparation d'échantillons (18), un module d'analyse en laboratoire (19) et le module de stockage et de récupération de données (20), le module de réception et de préparation d'échantillons (18) étant configuré pour générer un code de laboratoire pour l'échantillon, le module de visualisation de données (6) étant configuré pour échanger des données pour les échantillons avec le module de préparation d'échantillons (18), le module de communication (21) étant connecté à la capacité d'échange de données pour les échantillons au module agriculteur (X), et à l'appareil mobile de l'opérateur (14), et au module de génération de recommandations et d'émission d'une carte technologique pour l'agriculture du carbone (7).
